# FASCICULE DE BREVET EUROPEEN

(11) **EP 1 430 589 B1**
(45) Date de publication et mention de la délivrance du brevet: **31.08.2011**
(21) Numéro de dépôt: 02807921.8
(22) Date de dépôt: 25.09.2002
(51) Int. Cl.: H02K 37/12

(54) **MOTEUR POLYPHASE A DEUX OU TROIS PHASES**
ZWEI- ODER DREI-MEHRPHASIGER MOTOR
TWO-OR THREE-PHASE POLYPHASE MOTOR

(30) Priorité: 25.09.2001 FR 0112332
(43) Date de publication de la demande: 23.06.2004
(73) Titulaire: Moving Magnet Technologies, 25000 Besançon (FR)
(72) Inventeur: GANDEL, Pierre, F-25660 Montfaucon (FR); PRUDHAM, Daniel, F-25220 Thise (FR)
(74) Mandataire: Novagraaf Technologies
(86) Numéro de dépôt international: PCT/FR2002/003271
(87) Numéro de publication internationale: WO 2003/028193

(56) Documents cités:
- EP-A- 0 990 961
- US-A- 4 207 483
- US-A- 5 218 251
- US-B1- 6 198 182

## Description

La présente invention concerne le domaine des moteurs électriques polyphasés comportant un aimant cylindrique multipolaire. Un moteur selon le préambule de la revendication 1 est présenté dans US 6 198 182 B1.

Des moteurs diphasés ou triphasés présentent la particularité d'une structure hétéropolaire au rotor (aimants annulaires ou discaux à N paires de pôles) et hétéropolaires au stator avec P dents. N et P sont choisis de façon à obtenir une minimisation du couple sans courant.

On connaît notamment dans l'état de la technique le brevet français FR2742940 décrivant un moteur diphasé, notamment un moteur d'horlogerie ou un moteur pour l'entraînement d'une aiguille d'un afficheur. Ce brevet décrit un moteur polyphasé formé par une partie statorique excitée par des bobines électriques et par un rotor aimanté présentant N paires de pôles aimantés radialement en sens alternés, N étant égal à 3 ou à 5. La partie statorique présente au moins deux circuits en forme de W comportant chacun une bobine électrique entourant la jambe centrale. Les circuits en W sont disposés de façon à ce que lorsque l'une des jambes centrales se trouve en face d'une transition magnétique, l'autre jambe centrale se trouve en face d'un pôle magnétique. Les épanouissements polaires des jambes d'un circuit en W étant espacées angulairement de π/4 et les épanouissements polaires des jambes centrales de deux circuits en W appartenant à des phases différentes étant écartées angulairement d'un angle sensiblement égal à π/2±k.π/N, où N est le nombre de paires de pôles magnétiques, soit 3 ou 5 et k est égal à 0, 1, ou 2.

Le brevet français FR2754953 décrit un moteur polyphasé formé par une partie statorique excitée par des bobines électriques et par un rotor aimanté présentant N paires de pôles aimantés radialement en sens alternés, N étant égal à 4 ou à 5. La partie statorique présente au moins deux circuits en forme de W comportant chacun une bobine électrique entourant la jambe centrale. Les circuits en W sont disposés de telle façon que, lorsque l'une des jambes centrales se trouve en face d'une transition magnétique, l'autre jambe centrale se trouve en face d'un pôle magnétique. Les épanouissements polaires des jambes centrales de deux circuits en W appartenant à des phases différentes sont écartés angulairement d'un angle sensiblement égal à 120°.

Le problème posé par les moteurs de l'art antérieur est celui de l'encombrement selon l'axe de rotation du moteur en raison de l'emploi d'aimants cylindriques, et celui de la qualité des aimants cylindriques à anisotropie radiale, qui à énergie égale, ont un coût multiplié par 3 par rapport aux aimants disques à anisotropie axiale.

Le but de la présente invention est de proposer un moteur qui présente un couple sans courant nul, de haute performance pour un encombrement réduit. A cet effet, l'invention concerne selon son acception la plus générale un moteur polyphasé à M phases, M étant égal à 2 ou 3, le moteur étant formé par au moins une partie statorique (1) excitée par des bobines électriques et par un rotor (2) aimanté, caractérisé en ce que le rotor (2) présente une partie aimantée de forme discale avec R paires de pôles aimantés selon l'épaisseur en sens alternés, R étant égal à n*(M+1) ou 5*n, et en ce qu'au moins une des parties statoriques (1) présente S pôles excités pour certains au moins par une bobine électrique, S étant égal à 8*n pour M pair, et 9*n pour M impair, n étant un nombre entier supérieur ou égal à 1.

Selon une première variante, le stator est constitué de deux parties statoriques complémentaires présentant chacune S pôles disposés de part et d'autre de la partie aimantée.

Selon une deuxième variante, la partie aimantée est disposée entre les parties polaires du stator et une culasse.

Selon un mode de réalisation particulier, la partie aimantée est solidaire de ladite culasse.

Selon un premier exemple de mise en oeuvre, le rotor présente 3n paires de pôles et au moins une des parties statoriques présente 8*n pôles, n étant un nombre entier supérieur ou égal à 1.

Selon un deuxième exemple de mise en oeuvre, le rotor présente 5n paires de pôles et au moins une des parties statoriques présente 8*n pôles, n étant un nombre entier supérieur ou égal à 1.

Selon un troisième exemple de mise en oeuvre, le rotor présente 5n paires de pôles et au moins une des parties statoriques présente 9*n pôles, n étant un nombre entier supérieur ou égal à 1.

Selon un quatrième exemple de mise en oeuvre, le rotor présente 4n paires de pôles et au moins une des parties statoriques présente 9*n pôles, n étant un nombre entier supérieur ou égal à 1.

La présente invention sera mieux comprise à la lecture de la description d'un exemple non limitatif de réalisation qui suit, se référant aux dessins annexés où :
- la figure 1 représente une vue éclatée agrandie d'un moteur triphasé selon l'invention
- les figures 2 et 3 représentent des vues des deux parties statoriques du moteur représenté en figure 1 ;
- la figure 4 représente une vue en perspective d'un moteur diphasé à deux étages statoriques
- la figure 5 représente une vue d'une variante triphasée de réalisation à un seul étage statorique
- la figure 6 représente une vue éclatée d'un moteur diphasé
- la figure 7 représente une variante de réalisation d'un moteur triphasé à deux étages statoriques
- la figure 8 représente une autre variante de réalisation d'un moteur diphasé
- la figure 9 représente une vue d'une variante de réalisation où les dents statoriques sont radiales.

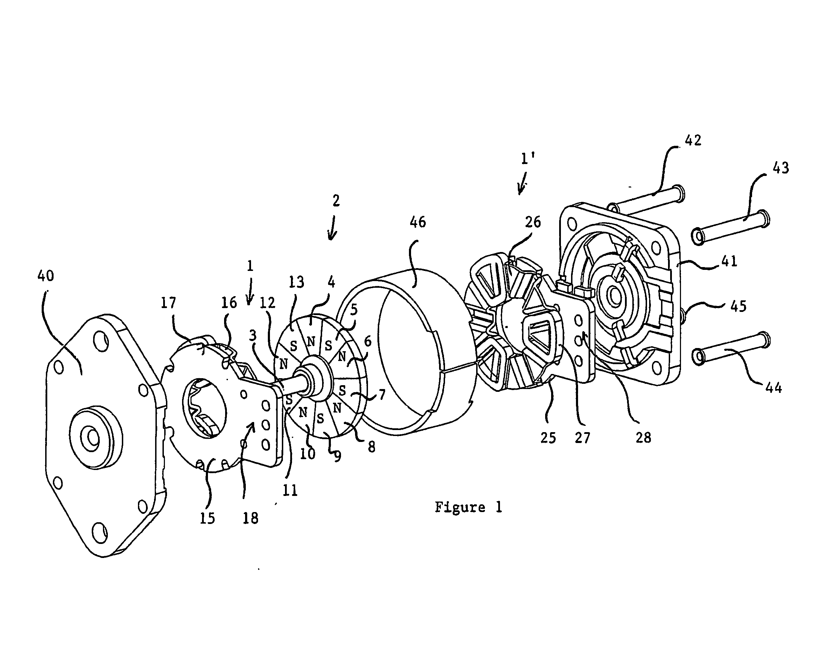

La figure 1 représente une vue éclatée d'un moteur triphasé selon l'invention. Il est constitué par deux parties statoriques (1, 1') et d'un rotor (2). Le rotor (2) est supporté par un axe (3).

Le rotor présente 10 aimants minces (4 à 13), aimantés dans le sens axial, c'est-à-dire selon l'épaisseur de l'aimant, de façon alternée. Chaque aimant présente la forme d'un quartier de disque.

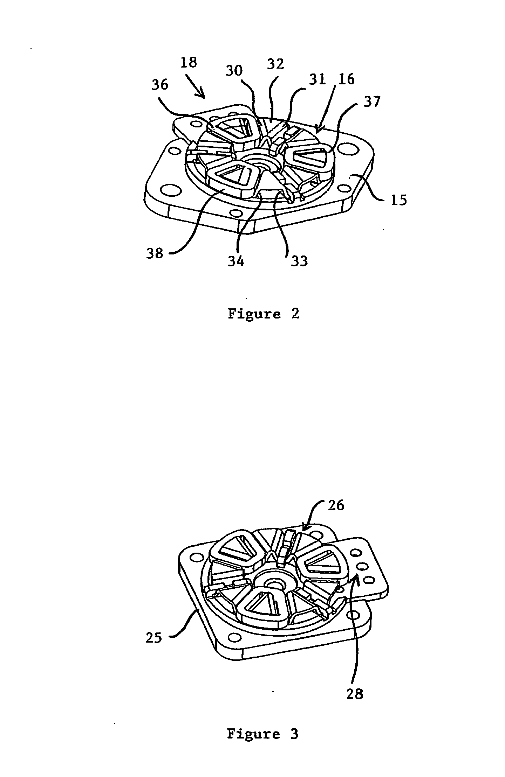

Le stator est formé de deux parties statoriques complémentaires représentées en figures 2 et 3, disposées de part et d'autre de la partie aimantée du rotor. Chaque partie statorique est supportée par une platine (15, 25) en matière plastique formant un flasque de fixation. La partie statorique est constituée par une couronne crantée (16, 26) formée par emboutissage d'une tôle d'un alliage de Fer et de Silicium, pour présenter 9 dents de forme trapézoïdale, avec des flancs latéraux (33, 34) sensiblement perpendiculaire au plan transversal et des chanfreins (30, 31) formés le long des arêtes supérieures, de part et d'autre de la face supérieure (32). Deux dents consécutives sont séparées par un espace radial.

Une dent sur trois est entourée par une bobine (17, 27). Les trois bobines (36, 37, 38) d'une même partie statorique sont reliées électriquement par un circuit imprimé à des bornes d'alimentation (18, 28) pour le raccordement à la source d'alimentation triphasée.

Un flasque arrière (40), un flasque avant (41) et une enveloppe cylindrique (46) en aluminium forme le boîtier. Des rivets (42 à 45) assurent la fixation de l'ensemble.

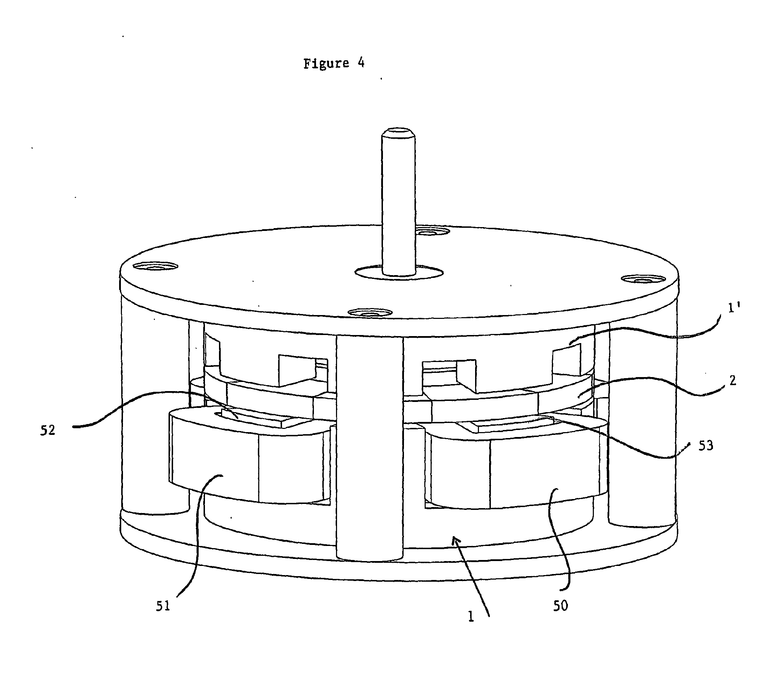

La figure 4 représente une variante diphasée de réalisation où le stator est formé de deux parties statoriques (1, 1') disposées de part et d'autre d'un rotor discal.

L'une des parties statoriques (1) supporte des bobines d'excitation (50, 51) entourant des dents (52, 53).

L'autre partie statorique (1') présentent des dents dont aucune n'est entourée par une bobine électrique.

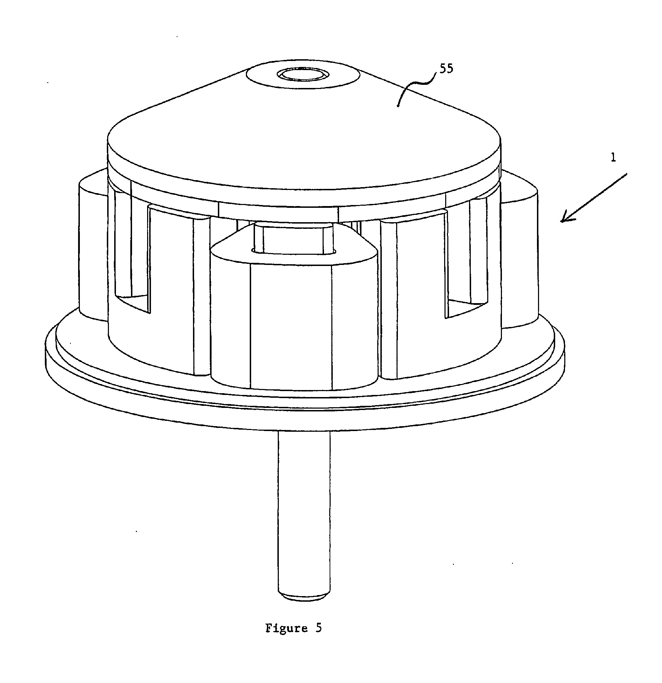

La figure 5 représente une autre variante triphasée de réalisation où le stator présente une seule partie (1). Le rotor présente une partie aimantée discale accolée à une culasse conique (55) assurant la fermeture des flux.

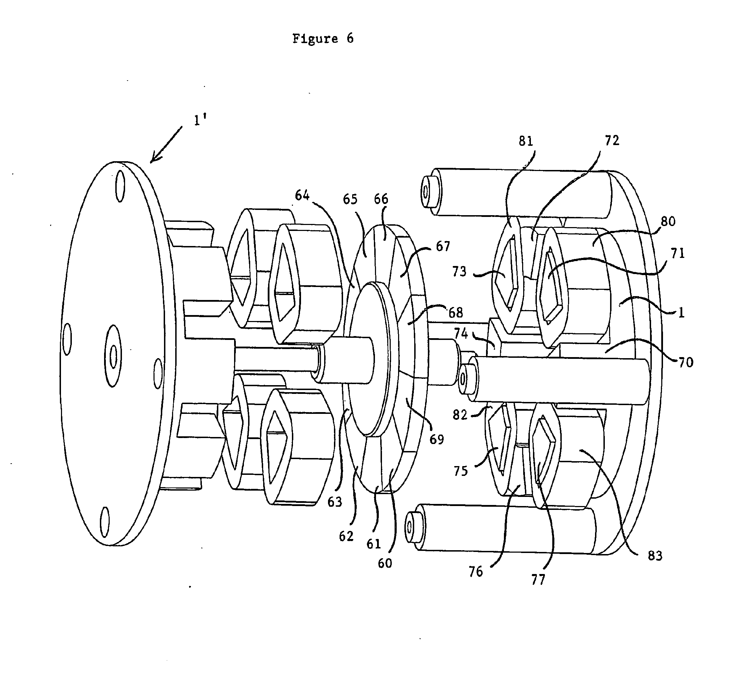

La figure 6 représente une variante de réalisation d'un moteur diphasé.

Le rotor (2) comporte 10 aimants minces (60 à 69) aimantés en sens alterné, selon l'épaisseur.

La partie statorique (1) présente 8 dents (70 à 78) dont une sur deux est entourée par une bobine (80 à 83).

La partie symétrique (1') est disposée symétriquement par rapport au plan des aimants (60 à 69). Elle présente également 8 dents dont une sur deux est entourée par une bobine.

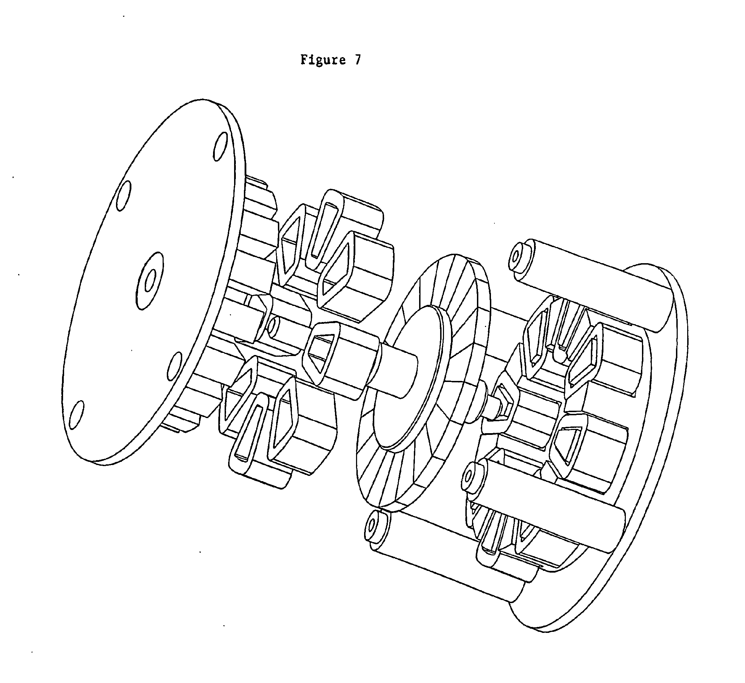

La figure 7 représente une variante de réalisation d'un moteur présentant 10 paires de pôles aimantés, et 32 dents statoriques, réparties en deux parties statoriques et excités par 16 bobines.

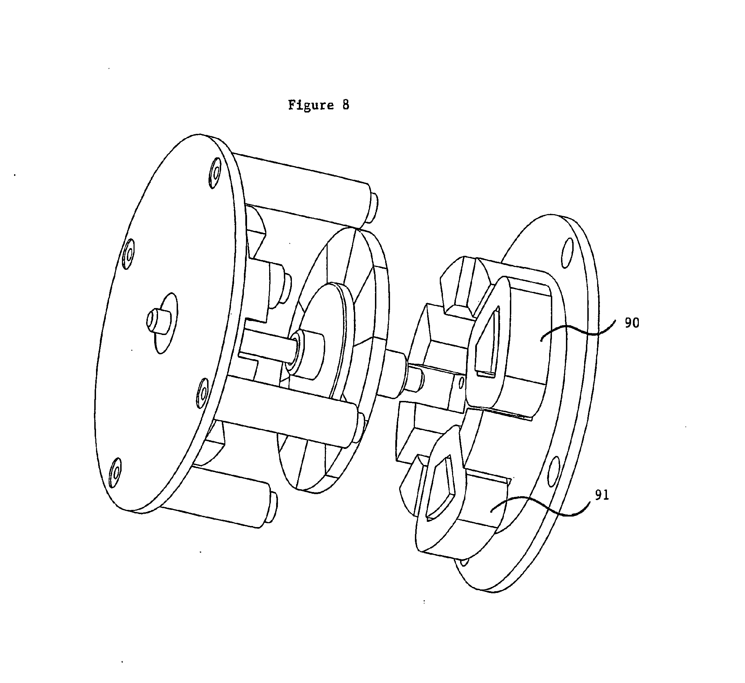

La figure 8 représente une variante de réalisation permettant de réduire le coût et l'encombrement d'un moteur diphasé selon l'invention, en limitant le nombre de bobines à 2 bobines (90, 91) pour une version diphasée. Les deux bobines entourent deux dents espacées par une dent non excitée.

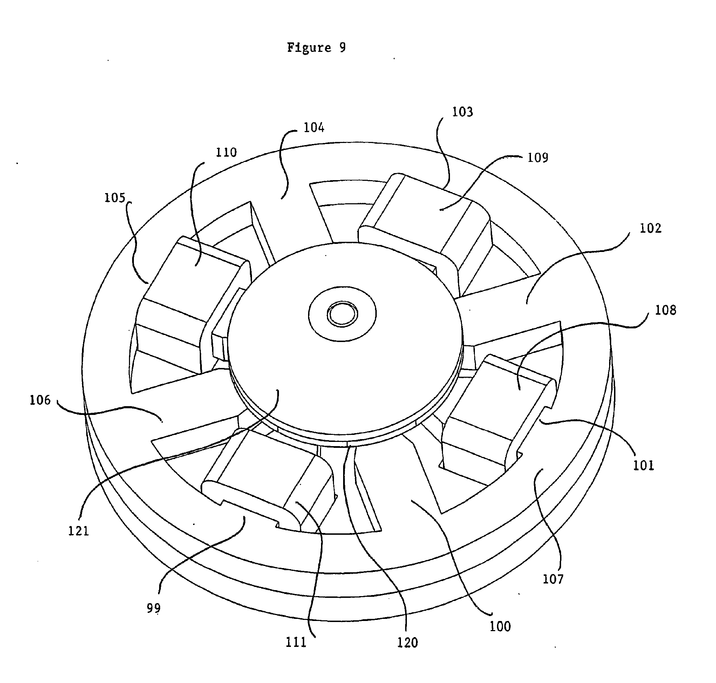

La figure 9 représente une vue d'une variante diphasée de réalisation où les dents statoriques (99 à 106) sont radiales.

Elles sont raccordées par une culasse annulaire (107). Une dent sur deux est entourée par une bobine (108 à 111) dont l'axe est radial.

Les dents présentent la forme de pattes radiales dont l'extrémité libre présente une forme trapézoïdale, et s'étend sous le disque aimanté (120). Le disque aimanté (120) présente sur sa face opposée une culasse (121) assurant la fermeture des flux.

## Revendications

1. Moteur polyphasé à M phases, M étant égal à 2 ou 3, le moteur étant formé par au moins une partie statorique (1) excitée par des bobines électriques et par un rotor (2) aimanté, le rotor (2) présentant une partie aimantée de forme discale avec R paires de pôles aimantés selon l'épaisseur en sens alternés, ladite partie statorique (1) présentant S pôles excités pour certains au moins par une bobine électrique, S étant égal à 8*n, pour M pair, et 9*n, pour M impair, n étant un nombre entier supérieur ou égal à 1, **caractérisé en ce que** R est égal n*(M+1) ou 5*n.

2. Moteur polyphasé selon la revendication 1, **caractérisé en ce que** le stator (1) est constitué de deux parties statoriques (1, 1') complémentaires présentant chacune S pôles disposés de part et d'autre de la partie aimantée.

3. Moteur polyphasé selon la revendication 1, **caractérisé en ce que** la partie aimantée est disposée entre les parties polaires du stator (1) et une culasse (55).

4. Moteur polyphasé selon la revendication 3, **caractérisé en ce que** la partie aimantée est solidaire de ladite culasse (55).

5. Moteur diphasé selon l'une quelconque des revendications précédentes, **caractérisé en ce que** le rotor (2)présente 3n paires de pôles et **en ce qu'**au moins une des parties statoriques (1,1') présente 8*n pôles, n étant un nombre entier supérieur ou égal à 1.

6. Moteur diphasé selon l'une quelconque des revendications 1 à 4, **caractérisé en ce que** le rotor (2)présente 5n paires de pôles et **en ce qu'**au moins une des parties statoriques (1, 1') présente 8*n pôles, n étant un nombre entier supérieur ou égal à 1 .

7. Moteur triphasé selon l'une quelconque des revendications 1 à 4, **caractérisé en ce que** le rotor (2) présente 5n paires de pôles et **en ce qu'**au moins une des parties statoriques (1, 1') présente 9*n pôles, n étant un nombre entier supérieur ou égal à 1.

8. Moteur triphasé selon l'une quelconque des revendications 1 à 4, **caractérisé en ce que** le rotor (2) présente 4n paires de pôles et **en ce qu'**au moins une des parties statoriques (1,1') présente 9*n pôles, n étant un nombre entier supérieur ou égal à 1.

9. Moteur polyphasé selon l'une quelconque des revendications 1 à 4, **caractérisé en ce que** les dents statoriques (100 à 106) sont radiales.

## Claims

1. Polyphase motor of M phases, M being equal to 2 or 3, the motor being formed by at least one stator part (1) which is excited by electrical coils and by a magnetised rotor (2), the rotor (2) having a discshaped magnetised part with R pairs of poles which are magnetised according to the thickness in alternate directions, said stator part (1) having S poles which are excited in some cases at least by an electrical coil, where S equals 8*n for even M and 9*n for odd M, and n is an integer greater than or equal to 1, **characterized in that** R equals n*(M+1) or 5*n.

2. Polyphase motor according to Claim 1, **characterized in that** the stator (1) consists of two complementary stator parts (1, 1'), each having S poles arranged on one side and the other of the magnetised part.

3. Polyphase motor according to Claim 1, **characterized in that** the magnetised part is arranged between the polar parts of the stator (1) and a yoke (55).

4. Polyphase motor according to Claim 3, **characterized in that** the magnetised part is integral with said yoke (55).

5. Diphase motor according to any one of the preceding claims, **characterized in that** the rotor (2) has 3n pairs of poles, and **in that** at least one of the stator parts (1, 1') has 8*n poles, where n is an integer greater than or equal to 1.

6. Diphase motor according to any one of Claims 1 to 4, **characterized in that** the rotor (2) has 5n pairs of poles, and **in that** at least one of the stator parts (1, 1') has 8*n poles, where n is an integer greater than or equal to 1.

7. Triphase motor according to any one of the Claims 1 to 4, **characterized in that** the rotor (2) has 5n pairs of poles, and **in that** at least one of the stator parts (1, 1') has 9*n poles, where n is an integer greater than or equal to 1.

8. Triphase motor according to any one of Claims 1 to 4, **characterized in that** the rotor (2) has 4n pairs of poles, and **in that** at least one of the stator parts (1, 1') has 9*n poles, where n is an integer greater than or equal to 1.

9. Polyphase motor according to any one of the Claims 1 to 4, **characterized in that** the stator teeth (100 to 106) are radial.

## Patentansprüche

1. Mehrphasenmotor mit M Phasen, wobei M gleich 2 oder 3 ist, wobei der Motor aus mindestens einem Statorteil (1), das von elektrischen Spulen erregt wird, und einem magnetisierten Rotor (2) besteht, wobei der Rotor (2) ein scheibenförmiges magnetisiertes Teil mit R Magnetpolpaaren aufweist, die mit abwechselnder Orientierung in Dickenrichtung magnetisiert sind, während das genannte Statorteil (1) S mindestens zum Teil durch eine elektrische Spule erregte Pole aufweist, wobei S gleich 8*n ist, wenn M gerade ist, und 9*n, wenn M ungerade ist, wobei n eine ganze Zahl größer oder gleich 1 ist, **dadurch gekennzeichnet, dass** R gleich n*(M+1) oder gleich 5*n ist.

2. Mehrphasenmotor nach Patentanspruch 1, **dadurch gekennzeichnet, dass** der Stator (1) aus zwei sich ergänzenden Statorteilen (1, 1') besteht, die jeweils S Pole aufweisen, die beiderseits des magnetisierten Teils angeordnet sind.

3. Mehrphasenmotor nach Patentanspruch 1, **dadurch gekennzeichnet, dass** das magnetisierte Teil zwischen den Polteilen des Stators (1) und einem Joch (55) angeordnet ist.

4. Mehrphasenmotor nach Patentanspruch 3, **dadurch gekennzeichnet, dass** das magnetisierte Teil mit dem Joch (55) fest verbunden ist.

5. Zweiphasenmotor nach irgendeinem der vorangehenden Patentansprüche, **dadurch gekennzeichnet, dass** der Rotor (2) 3n Polpaare aufweist und **dadurch**, dass mindestens eins der Statorteile (1, 1') 8*n Pole aufweist, wobei n eine ganze Zahl größer oder gleich 1 ist.

6. Zweiphasenmotor nach irgendeinem der Patentansprüche 1 bis 4, **dadurch gekennzeichnet, dass** der Rotor (2) 5n Polpaare aufweist und **dadurch**, dass mindestens eins der Statorteile (1, 1') 8*n Pole aufweist, wobei n eine ganze Zahl größer oder gleich 1 ist.

7. Dreiphasenmotor nach irgendeinem der Patentansprüche 1 bis 4, **dadurch gekennzeichnet, dass** der Rotor (2) 5n Polpaare aufweist und **dadurch**, dass mindestens eins der Statorteile (1, 1') 9*n Pole aufweist, wobei n eine ganze Zahl größer oder gleich 1 ist.

8. Dreiphasenmotor nach irgendeinem der Patentansprüche 1 bis 4, **dadurch gekennzeichnet, dass** der Rotor (2) 4n Polpaare aufweist und **dadurch**, dass mindestens eins der Statorteile (1, 1') 9*n Pole aufweist, wobei n eine ganze Zahl größer oder gleich 1 ist.

9. Mehrphasenmotor nach irgendeinem der Patentansprüche 1 bis 4, **dadurch gekennzeichnet, dass** die Statorzähne (100 bis 106) radial sind.
